# EUROPÄISCHE PATENTSCHRIFT

(11) **EP 3 070 674 B1**
(45) Veröffentlichungstag und Bekanntmachung des Hinweises auf die Patenterteilung: **26.05.2021**
(21) Anmeldenummer: 16156106.3
(22) Anmeldetag: 17.02.2016
(51) Int. Cl.: G06T 7/00, G06T 7/136

(54) **VERFAHREN ZUR QUALITÄTSBEURTEILUNG EINES MITTELS EINES ADDITIVEN HERSTELLUNGSVERFAHRENS HERGESTELLTEN BAUTEILS**
METHOD OF JUDGING QUALITY OF A COMPONENT THAT IS PRODUCED BY MEANS OF AN ADDITIVE MANUFACTURING PROCESS
PROCÉDÉ D'ÉVALUATION DE QUALITÉ D'UN COMPOSANT FABRIQUÉ SELON LE PROCÉDÉ DE FABRICATION ADDITIVE

(30) Priorität: 17.03.2015 DE 102015204800
(43) Veröffentlichungstag der Anmeldung: 21.09.2016
(73) Patentinhaber: MTU Aero Engines AG, 80995 München (DE)
(72) Erfinder: LADEWIG, Alexander, 83707 Bad Wiessee (DE)

(56) Entgegenhaltungen:
- EP-A1- 1 400 922
- DE-A1-102008 052 930
- US-A1- 2014 204 199
- Martin Wurm ET AL: "Vermessung der Laserbohrungen in faserverstärktem Graphit mittels Optischer Kohärenztomographie", , 1. Januar 2010 (2010-01-01), Seiten 133-139, XP055294829, Gefunden im Internet: URL:http://www.ndt.net/article/ctc2010/pap ers/133.pdf [gefunden am 2016-08-10]

## Beschreibung

Die Erfindung betrifft ein Verfahren zur Qualitätsbeurteilung eines mittels eines additiven Herstellungsverfahrens hergestellten Bauteils.

Additive Herstellungsverfahren bezeichnen Prozesse, bei denen anhand von digitalen 3D-Konstruktionsdaten Material schichtweise abgelagert wird, um ein Bauteil generativ aufzubauen. Damit unterscheiden sich additive bzw. generative Herstellungsverfahren von konventionellen abtragenden oder urformenden Fertigungsmethoden. Anstatt zum Beispiel ein Werkstück aus einem festen Block herauszufräsen, bauen additive Herstellungsverfahren Bauteile Schicht für Schicht aus einem oder mehreren Werkstoffen auf. Beispiele für additive Herstellungsverfahren sind generative Lasersinter- oder Laserschmelzverfahren, die beispielsweise zur Herstellung von Bauteilen für Flugtriebwerke verwendet werden. Ein solches Verfahren ist beispielsweise bereits aus der DE 10 2004 017 769 B4 bekannt. Beim selektiven Laserschmelzen werden dünne Pulverschichten des oder der verwendeten Werkstoffe auf eine Bauplattform aufgebracht und mit Hilfe eines oder mehrerer Laserstrahlen lokal aufgeschmolzen und verfestigt. Anschließend wird die Bauplattform abgesenkt, eine weitere Pulverschicht aufgebracht und erneut lokal verfestigt. Dieser Zyklus wird solange wiederholt, bis das fertige Bauteil erhalten wird. Das fertige Bauteil kann anschließend bei Bedarf weiterbearbeitet oder sofort verwendet werden. Beim selektiven Lasersintern wird das Bauteil in ähnlicher Weise durch laserunterstütztes Sintern von pulverförmigen Werkstoffen hergestellt. Aus DE 10 2008 052 930 A1 ist ein Bildverarbeitungssensor bekannt, der Bildverarbeitungsschritte durchführt, die auch zur Qualitätsüberwachung in einem additiv hergestellten Bauteil eingesetzt werden könnten.

Allerdings ist für den Einsatz hochbelastbarer Bauteile, die durch generative Laserverfahren hergestellt werden, eine Prozesszulassung erforderlich, die die Überwachung diverser Prozessparameter wie beispielsweise Laserleistung, Beschaffenheit und Zustand des Werkstoffpulvers und dergleichen voraussetzt. Die einzelnen Prozessparameter müssen dabei im Rahmen einer Prozessüberwachung mit einer jeweils angepassten, aufwändigen Messmethodik in Intervallen überwacht werden. Eine an sich bekannte Methode zur Überwachung des Schichtaufbaus ist die optische Tomographie (OT), die für jede hergestellte Bauteilschicht Bilddaten liefert, die Rückschlüsse auf die Qualität des additiven Fertigungsprozesses und damit des hergestellten Bauteils ermöglichen. Dabei wäre insbesondere eine automatische Auswertung von Prozessschwankungen wünschenswert, die sich generell durch vergleichsweise geringere Intensitätswerte in den OT-Bilddaten äußern. Die Quantifizierung der Helligkeitswerte kann auf Grund der Menge an Einflussgrößen aber bis heute nicht an absoluten Werten festgemacht werden. Auch ein qualitativ optimaler Soll-Prozess unterliegt unterschiedlichen Einflüssen wie etwa der Bauteilgeometrie, der Bauplattformbelegung, der Position innerhalb des Bauteils etc. und kann damit zu Bilddaten mit wechselnden Grauwertbereichen führen, die aber trotzdem ein qualitativ gutes Bauteil charakterisieren. Insbesondere kommt es bei der Beurteilung von Bildbereichen, deren Helligkeitswerte unterhalb eines bestimmten Toleranzbandes liegen, häufig zu Fehlinterpretationen, da beispielsweise an Bauteilkanten aufgrund des Übergangs von Bauteil zu Pulver zwangsläufig Bildabschnitte mit dunkleren Helligkeitswerten auftreten, die fälschlicherweise als Qualitätsmangel interpretiert werden. Ebenso entstehen in den sogenannten Max-Bildern, welche bisher für die meisten Anwendungen zur Qualitätsbeurteilung herangezogen werden, zwischen den Abtastfrequenzen dunklere Bereiche, die dann ebenfalls fälschlicherweise als unzulässige Abweichung beurteilt werden.

Aufgabe der vorliegenden Erfindung ist es, eine zuverlässigere Qualitätsbeurteilung von additiv hergestellten Bauteilen zu ermöglichen.

Die Aufgabe wird erfindungsgemäß durch ein Verfahren mit den Merkmalen des Patentanspruchs 1 gelöst, wobei vorteilhafte Ausgestaltungen des Verfahrens als vorteilhafte Ausgestaltungen der Vorrichtung und umgekehrt anzusehen sind.

Ein erster Aspekt der Erfindung betrifft ein Verfahren zur Qualitätsbeurteilung eines mittels eines additiven Herstellungsverfahrens hergestellten Bauteils, wobei eine zuverlässigere Qualitätsbeurteilung erfindungsgemäß dadurch ermöglicht ist, dass zumindest die Schritte Bereitstellen von Bilddaten, zumindest einer Bauteilschicht des Bauteils in digitalisierter Form, Umwandeln der Bilddaten in ein Binärbild, Erodieren des Binärbilds in ein Strukturbild, Ermitteln von Konturdaten des Strukturbilds, um die Übergänge zwischen dem Bauteil und einem angrenzenden Pulver, von der anschließenden Qualitätsbeurteilung auszuschliessen; Ermitteln wenigstens eines durch die Konturdaten begrenzten Bildabschnitts der Bilddaten, Prüfen des wenigstens einen Bildabschnitts auf das Vorliegen eines mit einem Qualitätsmangel korrespondierenden Bildbereichs und Klassifizieren des Bauteils als qualitativ in Ordnung, wenn kein Qualitätsmangel vorliegt, oder Klassifizieren des Bauteils als qualitativ nicht in Ordnung, wenn ein Qualitätsmangel vorliegt, durchgeführt werden. Das Verfahren wird für mehrere oder alle Bauteilschichten des Bauteils durchgeführt oder es werden Bilddaten verwendet, die eine Ebene durch mehrere Bauteilschichten charakterisieren. Mit anderen Worten wird zunächst eine Abbildung in digitalisierter Form als Bilddaten bereitgestellt, wobei die Abbildung eine Bauteilschicht des Bauteils zeigt. Diese Bilddaten werden anschließend binarisiert, das heißt in ein Binärbild umgewandelt, dessen Pixel nur die Werte "Schwarz" oder "Weiß" annehmen können. Jedes Pixel kann also mit einem Bit gespeichert werden. Die Kodierung der Pixel erfolgt grundsätzlich mit dem Wert 0 für Schwarz und 1 für Weiß, der umgekehrte Fall kann aber auch vorgesehen sein. Dieses Binärbild wird anschließend mittels eines Erosionsverfahrens in ein Strukturbild umgewandelt. Die Erosion wird dabei mit Hilfe einer Strukturmaske durchgeführt. Die Strukturmaske besitzt dabei die Dimension einer Teilmenge des gesamten Binärbilds. Die Erosion umfasst das pixelweise Verschieben der Strukturmaske über das Binärbild. Dabei wird geprüft, ob die Strukturmaske vollständig in die Pixelmenge am jeweiligen Ort des Binärbilds passt. Falls ja, gehört das Pixel des Binärbilds an der Stelle, an der sich der Bezugspunkt der Strukturmaske befindet, zur erodierten Datenmenge. Falls nein, gehört das Pixel nicht zur erodierten Datenmenge. Auf diese Weise werden die Übergänge zwischen dem Bauteil und dem angrenzenden Pulver, von der anschließenden Qualitätsbeurteilung ausgeschlossen, wodurch fehlerhafte Qualitätseinstufungen zuverlässig verhindert werden können. Je nachdem wie groß der Übergang zwischen Bauteil und Pulver ist, wird die Bauteilkontur damit formal verkleinert bzw. eingeengt. Anhand des erodierten Strukturbilds werden anschließend dessen Konturdaten ermittelt. Die Konturdaten charakterisieren damit die äußeren Konturlinien einer verkleinerten Bauteilkontur. Mit Hilfe der Konturdaten wird dann ein durch diese Konturdaten begrenzter Bildabschnitt der ursprünglichen Bilddaten ermittelt. Mit anderen Worten definieren die Konturdaten vollautomatisch mindestens einen "Bereich von Interesse" (ROI, Region of Interest) in den ursprünglichen Bilddaten. Anschließend wird der wenigstens eine Bildabschnitt auf das Vorliegen eines mit einem Qualitätsmangel korrespondierenden Bildbereichs geprüft. Wenn kein entsprechender Bildbereich bzw. Qualitätsmangel im Bildabschnitt ermittelt wird, wird das Bauteil als qualitativ in Ordnung klassifiziert. Falls umgekehrt ein Bildbereich im Bildabschnitt ermittelt wird, der für das Vorliegen eines Qualitätsmangels spricht, wird das Bauteil als qualitativ nicht in Ordnung klassifiziert. Da die Qualitätsprüfung erfindungsgemäß nur auf solche Bilddaten beschränkt wird, die nicht-fehlinterpretierbare Bildabschnitte charakterisieren, ist mit Hilfe des erfindungsgemäßen Verfahrens eine zuverlässige und vollautomatisierbare Qualitätsbeurteilung von additiv bzw. generativ hergestellten Bauteilen und Bauteilschichten ermöglicht.

In einer vorteilhaften Ausgestaltung der Erfindung ist vorgesehen, dass eine optische Tomographieeinrichtung verwendet wird, um die bereitzustellenden Bilddaten zu ermitteln. Vorzugsweise liefert die als Ermittlungseinrichtung fungierende optische Tomographieeinrichtung dabei Graustufenbilder mit mindestens 16 Bit Tiefe. Dies ermöglicht anschließend eine schnelle und präzise Binarisierung der Bilddaten.

Weitere Vorteile ergeben sich, indem die Bilddaten als aus mehreren Einzelbildern errechnetes Summenbild und/oder als Graustufenbild bereitgestellt werden. Die Verwendung eines Summenbildes, das beispielsweise durch Überlagerung bzw. Addition von zwei oder mehr Einzelbildern erhältlich ist, können unerwünschte dunkle Bildbereiche, die beispielsweise zwischen einzelnen Abtastbereichen auftreten können, sowie sonstige Artefakte zuverlässig verhindert werden. Alternativ oder zusätzlich bietet die Bereitstellung eines Graustufenbilds als Bilddaten den Vorteil, dass das anschließende Erosionsverfahren bei Graustufenbildern ähnlich einem Minimum-Filter funktioniert, so dass dunkle Strukturen vergrößert und hellere verkleinert werden. Hierdurch werden von der Beurteilung auszunehmende Randbereiche des Bauteils bzw. der betrachteten Bauteilschicht zuverlässig ausgeblendet und sind damit nicht Teil des zu prüfenden Bildabschnitts.

Weitere Vorteile ergeben sich, indem die Bilddaten mit Hilfe eines Schwellwertverfahrens in das Binärbild umgewandelt werden. Hierdurch können Abbildungsfehler wie Dunkelrauschen, Verstärkerglühen sowie sogenannte Hot- und Dark-Pixel berücksichtigt und bedarfsweise von der anschließenden Qualitätsprüfung ausgeschlossen werden.

Dabei hat es sich als vorteilhaft gezeigt, wenn ein im Rahmen des Schwellwertverfahrens verwendeter Schwellenwert derart gewählt wird, dass zumindest aus einem Dunkelstrom hervorgegangenes Bildrauschen entfernt wird. Dies ist insbesondere von Vorteil, wenn zum Ermitteln der Bilddaten eine Kamera verwendet wird oder wurde, die einen CMOS oder CCD Sensor verwendet, da diese Sensoren ein sogenanntes elektronisches Dunkelrauschen erzeugen, welches unter anderem von der Belichtungszeit, der Temperatur, den verwendeten ISO Einstellungen etc. abhängt. Daher kann zum Beispiel bei Bilddaten, die als 16-bit Grauwertbild vorliegen und dementsprechend nur Pixel mit Grauwerten zwischen 0 und 65535 enthalten, ein Schwellenwert von 3000 gewählt werden, um das Dunkelfeldrauschen des ursprünglich verwendeten Kamerasystems zu berücksichtigen und zuverlässig von der folgenden Qualitätsbeurteilung auszuschließen. Grundsätzlich können aber bedarfsweise auch andere Schwellenwerte gewählt werden.

In einer weiteren vorteilhaften Ausgestaltung der Erfindung wird zum Erodieren des Binärbilds eine quadratische Strukturmaske verwendet. Unter einer quadratischen Strukturmaske werden im Rahmen der Erfindung strukturierende Elemente mit einer Fläche von x^{∗}x Pixeln verstanden. Dabei kann x in Abhängigkeit der Bilddaten bzw. der Größe des Übergangs zwischen Pulver und Bauteil gewählt werden und beispielsweise zwischen 2 und 50 betragen. Vorzugsweise ist x eine ungerade Zahl, so dass die Strukturmaske beispielsweise Pixeldimensionen von 3^{∗}3, 5^{∗}5, 7^{∗}7, 9^{∗}9, 11^{∗}11, 13^{∗}13, 15^{∗}15, 17^{∗}17, 19^{∗}19, 21^{∗}21, 23^{∗}23, 25^{∗}25, 27^{∗}27, 29^{∗}29, 31^{∗}31, 33^{∗}33, 35^{∗}35 usw. besitzen kann.

In einer weiteren vorteilhaften Ausgestaltung der Erfindung ist vorgesehen, dass zum Prüfen des wenigstens einen Bildabschnitts auf das Vorliegen eines Qualitätsmangels zumindest die folgenden Schritte a) Bereitstellen eines ersten Datensatzes, wobei der erste Datensatz Absolutgrenzwerte umfasst, die jeweils einen maximal zulässigen Wertebereich an einem zugeordneten Bauteilort des herzustellenden Bauteils im Bildabschnitt charakterisieren, b) Erfassen eines zweiten Datensatzes mittels einer Erfassungseinrichtung, wobei der zweite Datensatz mit dem ersten Datensatz korrespondierende Ist-Werte umfasst, die den zugeordneten Bauteilort des hergestellten Bauteils im Bildabschnitt charakterisieren und c) Vergleichen des ersten Datensatzes und des zweiten Datensatzes mittels einer Recheneinrichtung durchgeführt werden. Im Schritt c1) wird das Bauteil dann als qualitativ grundsätzlich nicht in Ordnung klassifiziert, wenn wenigstens ein Ist-Wert außerhalb seines zugeordneten maximal zulässigen Wertebereichs liegt. Alternativ wird das Bauteil in Schritt c2) als qualitativ grundsätzlich in Ordnung klassifiziert, wenn kein Ist-Wert außerhalb seines zugeordneten maximal zulässigen Wertebereichs liegt. Wenn das Bauteil als qualitativ grundsätzlich nicht in Ordnung klassifiziert wurde, kann auf das Vorliegen einer gravierenden Störung oder Fehlfunktion geschlossen werden. Wenn das Bauteil als qualitativ grundsätzlich in Ordnung klassifiziert wurde, kann davon ausgegangen werden, dass der additive Herstellungsprozess und die Erfassungseinrichtung grundsätzlich funktionieren. In diesem Fall wird in einem anschließenden Schritt d) ein dritter Datensatz bereitgestellt, welcher Mittelwerte umfasst, die mittels der Recheneinrichtung aus mehreren Ist-Werten des zweiten Datensatzes ermittelt werden, wobei die mehreren Ist-Werte einen zusammenhängenden Bauteilbereich, bestehend aus mehreren Bauteilorten, charakterisieren. Dies führt zu einer entsprechenden Datenreduktion, da mehrere gemessene Ist-Werte eines Bauteilbereichs zu einem Mittelwert zusammengefasst werden. Anschließend wird in Schritt e) wenigstens eine bauteilgeometrieabhängige Ausgleichsfunktion anhand des dritten Datensatzes mittels der Recheneinrichtung ermittelt. Mit anderen Worten wird in Schritt e) eine "Best-Fit-Funktion", das heißt eine Ausgleichs- oder Näherungsfunktion durch alle Mittelwerte für das gesamte Bauteil ermittelt. Die Art der Ausgleichsfunktion kann dabei grundsätzlich jede geeignete mathematische Beschreibung sein, die den Verlauf der Mittelwerte durch das Bauteil möglichst genau abbildet. In Schritt f) werden dann bauteilgeometrieabhängige Schwellenwerte mittels der Recheneinrichtung ermittelt, wobei die Schwellenwerte einen zulässigen Streubereich der Ist-Werte um durch die Ausgleichsfunktion vorgegebene Soll-Werte charakterisieren. Mit anderen Worten werden in Schritt f) Schwellenwerte um diese Ausgleichsfunktion definiert und charakterisieren damit einen Soll-Prozess bzw. Soll-Werte. Die Schwellenwerte entsprechen damit dynamischen, bauteilbereichsabhängigen Grenzwerten und begrenzen einen zulässigen Streubereich der einzelnen Bauteilbereiche. In einem folgenden Schritt g) wird mittels der Recheneinrichtung geprüft, ob wenigstens ein Ist-Wert außerhalb des durch die Schwellenwerte charakterisierten Streubereichs liegt. Wenn kein Ist-Wert außerhalb des Streubereichs liegt, wird das Bauteil in Schritt g1) als qualitativ in Ordnung klassifiziert. Wenn wenigstens ein Ist-Wert außerhalb des Streubereichs liegt, werden in Schritt g2) alle Ist-Werte, die außerhalb des Streubereichs liegen, in einem fünften Datensatz zusammengefasst, wonach die Bauteilqualität anhand des fünften Datensatzes und wenigstens eines vorgegebenen Qualitätskriteriums beurteilt wird. Mit anderen Worten wird zunächst geprüft, ob ein oder mehrere Ist-Werte außerhalb des einen Soll-Prozess charakterisierten Streubereichs liegen. Falls dies nicht der Fall ist, entspricht das Bauteil der gewünschten Norm und wird als qualitativ in Ordnung bzw. als höchste Güteklasse eingestuft. Im anderen Fall werden alle von der Norm abweichenden Ist-Werte isoliert bzw. im fünften Datensatz gespeichert. In der weiteren Auswertung wird dann nur noch dieser fünfte Datensatz betrachtet, wodurch eine weitere Datenreduktion gegeben ist. Die Beurteilung der Bauteilqualität anhand des fünften Datensatzes und wenigstens eines vorgegebenen Qualitätskriteriums kann dann zu unterschiedlichen Ergebnissen führen. Beispielsweise kann das Bauteil weiterhin als in Ordnung klassifiziert, jedoch einer geringeren Güteklasse zugeordnet werden. Alternativ kann die Beurteilung aber auch ergeben, dass die Abweichungen einzeln oder in Summe so gravierend von der Soll-Qualität abweichen, dass das Bauteil als qualitativ nicht in Ordnung einzustufen ist. Damit ist eine vollständig oder zumindest weitgehend automatisierte und quantifizierte Qualitätsbeurteilung und Qualitätssicherung von Bauteilen ermöglicht, die durch ein additives Herstellungsverfahren hergestellt wurden. Es ist dabei zu betonen, dass dem Fachmann bewusst ist, dass die Reihenfolge verschiedener Verfahrensschritte grundsätzlich auch verändert werden kann. Beispielsweise können die Schritte a) und b) vertauscht werden. Ebenso ist zu betonen, dass das Verfahren nicht nur für vollständige Bauteile, sondern auch für erst teilweise hergestellte Bauteile bzw. für einzelne Bauteilschichten angewendet werden kann.

Weitere Vorteile ergeben sich, indem wenigstens ein Absolutgrenzwert des ersten Datensatzes anhand eines Erfahrungswerts und/oder anhand eines Messwerts eines Referenzbauteils mit fehlerfreiem Gefüge vorgegeben wird. Mit anderen Worten erfolgt die Festlegung der Absolutgrenzen über Erfahrungswerte und/oder über Testbaujobs bzw. Schliffe von diesen, welche gezeigt haben, dass sie ein fehlerfreies und dichtes Gefüge gebildet haben.

In einer weitere vorteilhaften Ausgestaltung der Erfindung ist vorgesehen, dass das additive Herstellungsverfahren und/oder die Ermittlungseinrichtung kontrolliert wird, wenn das Bauteil in Schritt c1) als grundsätzlich nicht in Ordnung klassifiziert wird. Wenn in Schritt c1) festgestellt wurde, dass das Bauteil grundsätzlich nicht in Ordnung ist, da wenigstens ein Ist-Wert außerhalb des durch die Absolutgrenzwerte definierten Zulässigkeitsbereichs liegt, ist davon auszugehen, dass ein schwerwiegender Fehler im Herstellungsverfahren und/oder bei der Ermittlungseinrichtung vorliegt. Eine Kontrolle des additiven Herstellungsverfahrens kann beispielsweise die Überprüfung einer Laserleistung, des verwendeten Materials oder anderer Prozessparameter wie beispielsweise den 3D-Daten des Bauteils umfassen. Alternativ oder zusätzlich wird die korrekte Funktion der Ermittlungseinrichtung geprüft. Auf diese Weise können grundlegende Störungen identifiziert und behoben werden, wodurch eine hohe Bauteilqualität und ein geringer Ausschuss sichergestellt werden.

In einer weiteren vorteilhaften Ausgestaltung der Erfindung werden die Mittelwerte des dritten Datensatzes als arithmetisches Mittel und/oder als Modus und/oder als Median und/oder als geometrisches Mittel und/oder als harmonisches Mittel und/oder als quadratisches Mittel und/oder als kubisches Mittel ermittelt. Dadurch erhält man für jeden Bauteilbereich einen Datenpunkt, der der die Lage der Ist-Werte in Bezug auf den betrachteten Bauteilbereich beschreibt. In Abhängigkeit des betrachteten Bauteils bzw. Bauteilbereichs können die Mittelwerte nach unterschiedlichen Rechenvorschriften ermittelt werden, wodurch unterschiedliche Kontexte optimal berücksichtigt werden können, um die jeweilige Verteilung der betrachteten Ist-Werte zu charakterisieren.

Weitere Vorteile ergeben sich, wenn die Mittelwerte des dritten Datensatzes anhand von Ist-Werten ermittelt werden, die eine belichtete Schichtfläche des Bauteils und/oder einen Bereich einer belichteten Schichtfläche des Bauteils charakterisieren. Mit anderen Worten werden als Bauteilbereich die einzelnen, während des additiven Herstellungsverfahrens entstehenden Bauteilschichten oder Teilbereiche davon verwendet. Hierdurch werden Mittelwerte erhalten, die jeweils eine Bauteilschicht charakterisieren. Dies erlaubt eine besonders einfache und schnelle Qualitätsbeurteilung des gesamten Bauteils sowie der einzelnen Bauteilschichten, so dass bei ermittelten Abweichungen in einer bestimmten Schicht eine entsprechend schnelle und einfache Anpassung des additiven Herstellungsverfahrens ermöglicht ist.

Weitere Vorteile ergeben sich, wenn die Ist-Werte im fünften Datensatz zur Beurteilen der Bauteilqualität zunächst anhand wenigstens eines Gewichtungsfaktors gewichtet werden. Dies erlaubt eine verbesserte Qualitätsbeurteilung, da somit wichtigere oder zuverlässigere Ist-Werte größeren Einfluss auf die Qualitätsbeurteilung haben als weniger wichtige oder unzuverlässige Ist-Werte.

In einer weiteren vorteilhaften Ausgestaltung der Erfindung ist vorgesehen, dass als Gewichtungsfaktor eine Anzeigenkennzahl und/oder eine Anzahl der Anzeigen im Bauteil und/oder ein Abstand zu einer benachbarten Anzeige und/oder eine Position im Bauteil verwendet wird. Hierdurch wird eine verbesserte Fehlergewichtung ermöglicht. Die Anzeigenkennzahl beschreibt dabei grundsätzlich einen Typ einer bestimmten Prozessabweichung, die eine bestimmte Auswirkung auf das Bauteil besitzt. Dementsprechend hat es sich als vorteilhaft gezeigt, wenn verschiedene Anzeigenkennzahlen für unterschiedliche Prozessabweichungen verwendet werden. Der Abstand zwischen benachbarten Anzeigen kann als Maß für die Schwere einer zugeordneten Prozessabweichung bzw. eines zugeordneten Fehlers herangezogen werden. Alternativ oder zusätzlich kann die Position einer Prozessabweichung bzw. eines Fehlers innerhalb des Bauteils zur Bewertung des entsprechenden Fehlers herangezogen werden. Hintere Bereiche im Bauteil sind dabei üblicherweise stärker zu bewerten als vordere Bereiche.

In weiterer Ausgestaltung der Erfindung hat es sich als vorteilhaft gezeigt, wenn als Qualitätskriterium ein Farbwert und/oder ein Grauwert und/oder eine Größe und/oder eine Form verwendet wird. Beispielsweise können für die Bildung der Anzeigenkennzahl verschiedene Werte aus der Bildverarbeitung verwendet werden, um die Art bzw. den Typ und die Schwere der jeweils vorliegenden Prozessabweichung zu identifizieren.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigen:
- Fig. 1: eine Abbildung einer additiv hergestellten Bauteilschicht mit einer Prozessstörung;
- Fig. 2: ein Binärbild der in Fig. 1 gezeigten Abbildung;
- Fig. 3: ein Strukturbild, das durch Erosion des Binärbilds erzeugt wurde; und
- Fig. 4: die in Fig. 1 gezeigte Abbildung mit einem anhand des Strukturbilds ermittelten Bildabschnitt, innerhalb dessen eine anschließende Qualitätsprüfung durchgeführt wird.

Im Rahmen einer additiven Herstellung eines Bauteils, beispielsweise mittels eines Lasersinter- oder Laserschmelzverfahrens, wird das Bauteil in an sich bekannter Weise iterativ aus mehreren Schichten anhand von vorgegebenen 3D-Baudaten gebildet. Für jede Schicht wird ein 16 Bit-Grauwertbild aufgenommen, wobei jedes Pixel des Grauwertbilds einen Helligkeitswert (Ist-Wert) an einem Bauteilort des hergestellten Bauteils codiert.

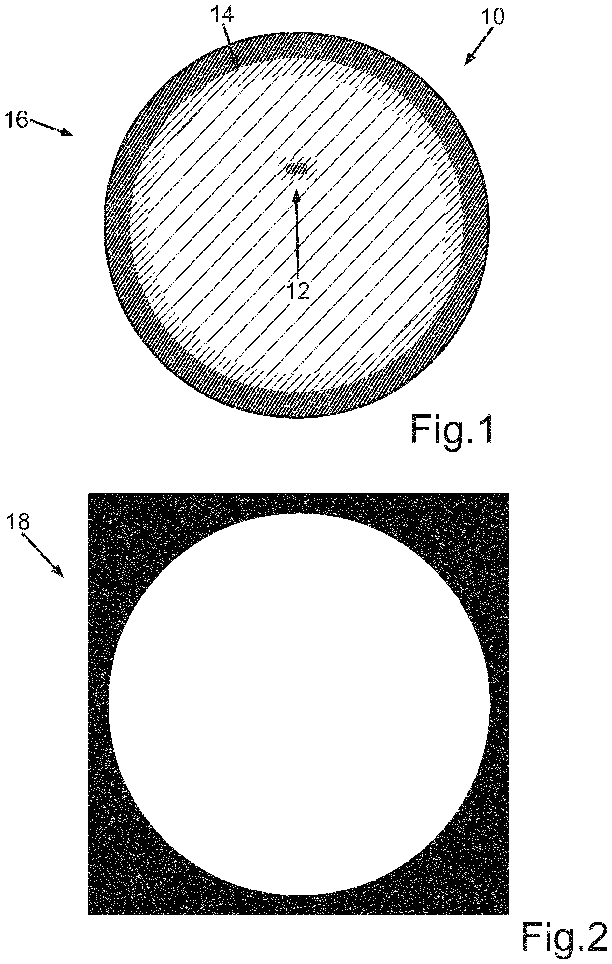

Fig. 1 zeigt beispielhaft eine Abbildung einer additiv hergestellten, runden Bauteilschicht 10 des Bauteils, die eine Prozessstörung 12 und damit einen Qualitätsmangel aufweist. Als Abbildung wird im gezeigten Ausführungsbeispiel ein Summenbild verwendet, das durch Addition mehrerer Einzelbilder erhalten wurde und Form von digitalen Bilddaten vorliegt. Die Einzelbilder wurden mit einer optischen Tomographieeinrichtung (OT) ermittelt. Durch Verwendung des Summenbildes treten keine die Auswertung erschwerenden dunklen Bereiche zwischen den Abtastbereichen der OT auf. Etwaige Überlappbereiche in den Summenbildern spielen für die Auswertung "kälterer" Bildbereiche keine Rolle.

Man erkennt, dass die Bauteilschicht 10 einen randständigen, ringförmigen Übergangsbereich 14 zur angrenzenden, die Bauteilschicht 10 umgebenden Pulverschicht 16 aufweist. Der Übergangsbereich 14 zeichnet sich durch vergleichsweise dunkle und uneinheitliche Farben bzw. Helligkeitswerte aus, die zu einer fehlerhaften Qualitätsbeurteilung der Bauteilschicht 10 führen könnten.

Zur gezielten Erfassung dunklerer Bereiche in der Abbildung werden die Bilddaten daher zunächst binarisiert, das heißt in eine digitale Rastergrafik umgewandelt, deren Pixel nur die zwei Farben Schwarz und Weiß bzw. die Werte 0 und 1 annehmen können. Das resultierende Binärbild 18 ist in Fig. 2 dargestellt. Man erkennt, dass die weiße Fläche des Binärbilds 18 im Wesentlichen dem Umriss der Bauteilschicht 10 folgt, so dass alle Bildbereiche, die die Bauteilschicht 10 abbilden weiß und alle Bildbereiche, die die umgebende Pulverschicht 16 abbilden, schwarz symbolisiert sind. Zum Binarisieren wird dabei eine Farb- bzw. Grauwertschwelle verwendet, von welcher bekannt ist, dass sie durch die belichteten Flächen zuverlässig überschritten wird bzw. die ein etwaiges Dunkelfeldrauschen der verwendeten Kamerasystems zuverlässig ausschließt. Der verwendete Schwellenwert kann beispielsweise bei 16-bit Bilddaten (0-65535 Grau- bzw. Helligkeitswerte) 3000 betragen. Bedarfsweise können aber auch höhere oder niedrigere Schwellenwerte oder andere Binarisierungsverfahren verwendet werden.

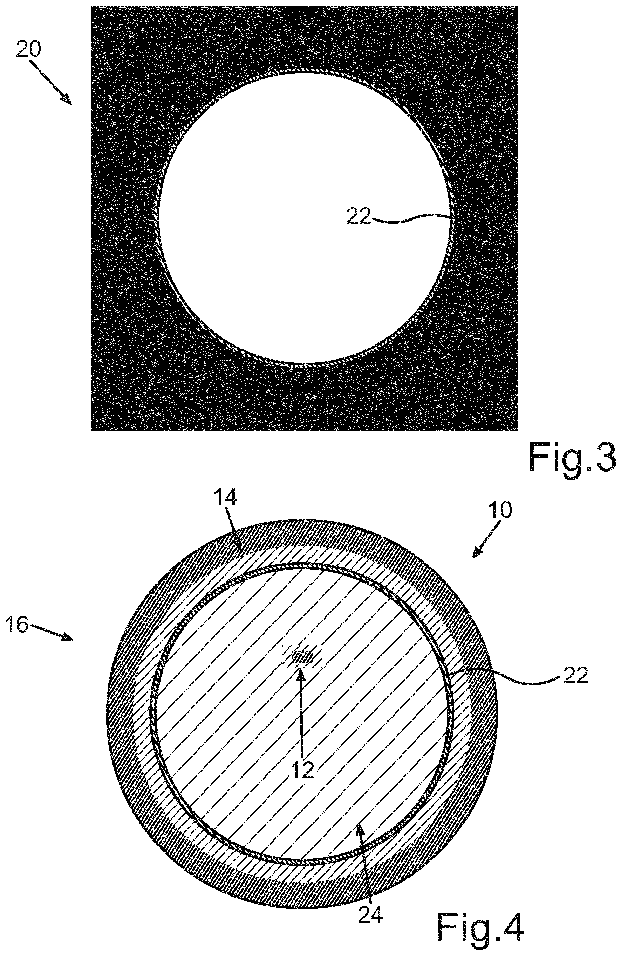

Das Binärbild 18 wird anschließend mit Hilfe eines Erosionsverfahrens in ein in Fig. 3 dargestelltes Strukturbild 20 umgewandelt. Die Form und Größe des dabei verwendeten Erosionsfilters, der auch als Strukturmaske bezeichnet wird, hängen dabei von der Größe des Übergangs zwischen Pulverschicht 16 und Bauteilschicht 10 ab. Beispielsweise kann ein quadratischer Erosionsfilter mit 3x3, 5x5 oder 7x7 Pixeln verwendet werden. Ebenso kann ein kreisrunder Erosionsfilter vorgesehen sein. Man erkennt in Fig. 3, dass das resultierende Strukturbild 20 ebenfalls ein zweifarbiges s/w-Bild ist, wobei der weiße Bereich aber im Vergleich zum Binärbild 18 kleiner ist. Dementsprechend wurden durch die Erosion ursprünglich dunklere Bildbereiche formal vergrößert, während hellere Bildbereiche formal verkleinert wurden.

Anhand des Strukturbilds 20 werden dessen Konturdaten 22 ermittelt, die als äußere Konturlinie des verkleinerten weißen Bereichs des Strukturbilds 20 die anschließend zu prüfenden Bauteilkontur definieren. Wie in Fig. 4 ersichtlich, werden diese Konturdaten 22 extrahiert, gespeichert und mit der in Fig. 1 gezeigten, ursprünglichen Abbildung überlagert. Man erkennt, dass die Konturdaten 22 den außerhalb der Konturdaten 22 liegenden Übergangsbereich 14 von einem innerhalb der Konturdaten 22 liegenden Bildabschnitt 24 abteilen. Die anschließende Qualitätsprüfung des Bauteils bzw. der Bauteilschicht 10 wird ausschließlich innerhalb des Bildabschnitts 24 durchgeführt, wohingegen die außerhalb liegenden Bildbereiche, die sowohl den Übergangsbereich 14 als auch die Pulverschicht 16 enthalten, nicht berücksichtig werden. Man erkennt, dass sich die Prozessstörung 12 durch einen vergleichsweise dunkleren Bildbereich auszeichnet. Werden solche vergleichsweise dunklen Bildbereiche im Bildabschnitt 24 ermittelt, kann die Bauteilschicht 10 und damit das gesamte Bauteil als qualitativ nicht in Ordnung klassifiziert werden. In Abhängigkeit der Anzahl, Art und Fläche der Prozessstörung(en) 12 kann das Bauteil aber auch als qualitativ grundsätzlich in Ordnung klassifiziert, aber einer geringeren Güteklasse zugeordnet werden.

Die Qualitätsprüfung der einzelnen Bauteilschichten 10 erfolgt wie bereits erwähnt ausschließlich anhand der durch Binarisierung und Erosion ermittelten Bildabschnitte 24 der betreffenden Abbildungen. Alle ermittelten Bildabschnitte 24 der Grauwertbilder werden zu einem zweiten Datensatz mit Ist-Werten des Bauteils zusammengefasst. Für jeden Bildabschnitt 24 werden dann der maximale Grauwert und die Summe der Grauwerte über alle Pixel des Bildabschnitts 24 ermittelt. Anschließend wird geprüft, ob die ermittelten Ist-Werte teilweise oder vollständig außerhalb eines maximal zulässigen Wertebereichs liegen, der durch einen ersten Datensatz mit Absolutgrenzwerten für das herzustellende Bauteil vorgegeben ist. Die Absolutgrenzwerte definieren einen plausiblen Bereich, in dem der Soll-Prozess für jedes Bauteil liegen darf. Die Definition der Absolutgrenzwerte erfolgt über Erfahrungswerte bzw. über Testbaujobs und Schliffe von diesen, welche gezeigt haben, dass sie ein fehlerfreies und dichtes Gefüge gebildet haben. Diese Absolutgrenzwerte dienen vorwiegend dazu, eine massive Veränderung der Laserleistung oder andere Effekte wie falsch gewählte Bauparameter oder dergleichen zuverlässig auszuschließen. Auch grobe Fehlfunktionen des OT-Systems können so detektiert und gegebenenfalls behoben werden. Daher werden die Ist-Werte mit ihren korrespondierenden Absolutgrenzwerten verglichen. Die Absolutgrenzwerte sind im vorliegenden Beispiel ebenfalls als Grauwerte, das heißt als Helligkeitswerte codiert.

Anschließend kann eine grundsätzlich optionale Dokumentation erfolgen. Beispielsweise können die ermittelten Schichtbilder, der Ort und/oder die Anzahl ermittelter Überschreitungen von Absolutgrenzwerten für eine bestimmte Bauteilschicht, die Anzahl der kumulierten Fehler bis zum aktuellen Zeitpunkt und dergleichen mittels einer Rechenmaschine in einer Datenbank gespeichert und/oder mittels einer Anzeigeeinrichtung angezeigt werden.

In Abhängigkeit vom Prüfergebnis der Bildabschnitte 24 wird dann unterschieden, ob das Bauteil bzw. die derzeit geprüfte Bauteilschicht 10 grundsätzlich in Ordnung oder grundsätzlich nicht in Ordnung ist. Wenn eine Abweichung von den Absolutgrenzwerten festgestellt wurde, sind offenbar eine gravierende Prozessstörung 12 und/oder eine Störung des OT-Systems aufgetreten. In diesem Fall müssen das Herstellungsverfahren und/oder die Ermittlungseinrichtung überprüft werden.

Im anderen Fall, das heißt wenn die derzeit geprüfte Bauteilschicht 10 grundsätzlich in Ordnung ist, können gravierende Störungen in der Strahlschmelzanlage oder im Messsystem ausgeschlossen werden. Dementsprechend werden zumindest die vorstehend beschriebenen Prüfschritte mit der jeweils nächsten Bauteilschicht 10 bis zum Ende des additiven Herstellungsverfahrens wiederholt.

In einem weiteren Schritt werden alle Ist-Werte bzw. Bildabschnitte 24 zu einem zweiten Datensatz zusammengefasst und mit einem ersten Datensatz verglichen, um zu prüfen, ob unzulässige Überschreitungen der ermittelten Ist-Werte von vorgegebenen Absolutwerten für die Bauteilschicht 10 vorliegen. Falls die Bauteilschicht 10 fehlerfrei ist, können die Schichtdaten des Bauteils zur Definition des ersten Datensatzes bzw. zur Definition des Soll-Prozesses verwendet werden. Hierzu werden für jede Bauteilschicht 10 der Modus und/oder das arithmetische Mittel ermittelt. Weiterhin wird der Mittelwert aller Ist-Werte bestimmt. Schließlich wird der bauteilortabhängige Verlauf der Streuung für das Bauteil ermittelt.

Zur Qualitätsbeurteilung wird weiterhin geprüft, ob die ermittelten Ist-Werte des zweiten Datensatzes innerhalb der zulässigen und durch den ersten Datensatz definierten Absolutgrenzen liegen. In einem alternativen Schritt könnte grundsätzlich auch geprüft werden, ob die Mittelwerte der Bauteilschichten 10 jeweils innerhalb entsprechender Absolutgrenzmittelwerte liegen. Falls ein grober Fehler, das heißt eine Überschreitung der vorgegebenen Grenzwerte vorliegt, wird das Herstellungsverfahren zunächst abgebrochen, um die grundsätzliche Funktionsfähigkeit der additiven Herstellungsverfahrens und/oder der Ermittlungseinrichtung (OT-System) zu überprüfen.

Ist sichergestellt, dass das additive Herstellungsverfahren und das OT-System grundlegend funktionieren, werden alle nach Binarisierung und Erosion ermittelten Grauwerte des Baujobs bereitgestellt und aus jeder Schicht der Mittelwert oder Modus aller Grauwerte ermittelt. Dadurch erhält man für jede Bauteilschicht 10 einen Datenpunkt. Anhand dieser Mittelwerte wird eine bauteilgeometrieabhängige Ausgleichsfunktion (Best-Fit-Funktion) ermittelt, die den geometrieabhängigen Grauwertverlauf beschreibt. Abhängig von der Geometrie der aufgebauten Bauteile können unterschiedliche Verläufe der Grauwerte auftreten. Die Art der Ausgleichsfunktion kann daher im einfachsten Fall eine Ausgleichsgerade sein, ebenfalls denkbar sind aber auch alle anderen geeigneten Ausgleichsfunktionen, beispielsweise Polynome n-ten Grades oder sonstige mathematische Beschreibungen, die den Verlauf des Baujobs möglichst exakt abbilden.

Durch definierte Grenzen um diese Ausgleichsfunktion wird der Soll-Prozess näher charakterisiert. Hierzu werden bauteilgeometrieabhängige, dynamische Schwellenwerte ermittelt, die einen normalen Streubereich der einzelnen Bauteilschichten 10 in Abhängigkeit der Bauteilgeometrie und der Bauhöhe definieren.

Daran anschließend werden alle Ist-Werte dahingehend überprüft, ob sie innerhalb der durch die Ausgleichsfunktion und die Schwellenwerte definierten Norm- oder Soll-Grenzen liegen. Falls ja, wird das Bauteil als qualitativ in Ordnung klassifiziert. Ansonsten werden alle Ist-Werte, die außerhalb des Streubereichs liegen, in einem fünften Datensatz zusammengefasst und nochmals näher bewertet. Diese Bewertung wird anhand mehrerer Qualitätskriterien und Gewichtungsfaktoren durchgeführt.

Als Gewichtungsfaktoren für die Anzeige werden zunächst eine Anzeigenkennzahl, die Anzahl der Anzeigen im Bauteil, der Abstand zur nächsten Anzeige sowie die Lage im Bauteil verwendet. Ausgehend von der Anzeigenkennzahl können verschiedene Anzeigenarten vorgesehen sein. Ausgehend vom Abstand zur nächsten Anzeige können die Ausprägung in X/Y-Ebene der Bauteilschicht 10 und/oder die Ausprägung in Aufbaurichtung Z des Bauteils zur Qualitätsbeurteilung herangezogen werden. Ausgehend von der Lage im Bauteil kann geprüft werden, ob die Abweichung im Volumen des Bauteils und/oder am Rand des Bauteils liegt und/oder das Bauteil vollständig durchdringt.

Als qualitätsrelevante Einflussfaktoren, die einzeln oder in Gruppen angezeigt werden können, werden weiterhin die ermittelten Grauwerte (Ist-Werte) und/oder die Größe der im fünften Datensatz vorhandenen Ist-Werte und/oder die durch den fünften Datensatz charakterisierten geometrischen Formen herangezogen. Ausgehend von den ermittelten Grauwerten können die folgenden Parameter, einzeln und in beliebiger Kombination, angezeigt werden:
- die Maximal- und Minimalwerte;
- der Mittelwert einer Anzeige;
- der Verlauf oder Gradient; und/oder
- die Streuung.

Anhand der Maximal- und Minimalwerte können weiterhin die entsprechenden Absolutwerte und/oder die relative Lage der Maximal- und Minimalwerte bezogen auf den Modus bzw. Mittelwert angezeigt werden. Entsprechend können ausgehend vom Mittelwert einer Anzeige der entsprechende Absolutwert und/oder die relative Lage von Mittelwert und Modus zueinander angezeigt werden.

Ausgehend von der Größe der im fünften Datensatz vorhandenen Ist-Werte können die folgenden Parameter, einzeln und in beliebiger Kombination, angezeigt werden:
- Ausprägung in X/Y-Ebene; und
- Ausprägung in Aufbaurichtung Z.

Auf Basis der genannten Charakterisierung und Quantifizierung wird dann eine Güteklasse des Bauteils ermittelt. Beispiele für mögliche Güteklassen sind "Ausschuss", "Gutteil", "Entscheid" oder äquivalente Bezeichnungen. Die zur Quantifizierung der Güteklassen herangezogenen Werte und Parameter können anhand von Erfahrungswerten wie Werkstoffdaten, POD-Daten (Probability Of Detection - Wahrscheinlichkeit für die Erkennung von Merkmalen/Eigenschaften, Auffindwahrscheinlichkeit), NTD/DT Reliablity-Daten (Vertrauenswürdigkeit/Zuverlässigkeit von Methoden zur Werkstoffprüfung, Verhältnis von "korrekten Daten" zu "Fehlalarm") oder dergleichen festgelegt bzw. überprüft werden.

Das vorstehend beschriebene Verfahren kann grundsätzlich vollständig oder teilweise computerbasiert durchgeführt werden. Bei dem geprüften Bauteil kann es sich um ein Bauteil für ein Flugtriebwerk und/oder eine Strömungsmaschine handeln. Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Bauteilschicht
- 12: Prozessstörung
- 14: Übergangsbereich
- 16: Pulverschicht
- 18: Binärbild
- 20: Strukturbild
- 22: Konturdaten
- 24: Bildabschnitt

## Patentansprüche

1. Verfahren zur Qualitätsbeurteilung eines mittels eines additiven Herstellungsverfahrens hergestellten Bauteils, umfassend die Schritte:
- Bereitstellen von Bilddaten zumindest einer Bauteilschicht des Bauteils in digitalisierter Form;
- Umwandeln der Bilddaten in ein Binärbild (18);
- Erodieren des Binärbilds (18) in ein Strukturbild (20);
- Ermitteln von Konturdaten (22) des Strukturbilds (20), um die Übergänge zwischen dem Bauteil und dem angrenzenden Pulver von der anschließenden Qualitätsbeurteilung auszuschliessen;
- Ermitteln wenigstens eines durch die Konturdaten (22) begrenzten Bildabschnitts (24) der Bilddaten;
- Prüfen des wenigstens einen Bildabschnitts (24) auf das Vorliegen eines mit einem Qualitätsmangel korrespondierenden Bildbereichs; und
- Klassifizieren des Bauteils als qualitativ in Ordnung, wenn kein Qualitätsmangel vorliegt, oder
- Klassifizieren des Bauteils als qualitativ nicht in Ordnung, wenn ein Qualitätsmangel vorliegt, **dadurch gekennzeichnet, dass**
das Verfahren für mehrere oder alle Bauteilschichten des Bauteils oder für Bilddaten, die eine Ebene durch mehrere Bauteilschichten charakterisieren, durchgeführt wird.

2. Verfahren nach Anspruch 1,
**dadurch gekennzeichnet, dass**
eine optische Tomographieeinrichtung verwendet wird, um die bereitzustellenden Bilddaten zu ermitteln.

3. Verfahren nach Anspruch 1 oder 2,
**dadurch gekennzeichnet, dass**
die Bilddaten als aus mehreren Einzelbildern errechnetes Summenbild und/oder als Graustufenbild bereitgestellt werden.

4. Verfahren nach einem der Ansprüche 1 bis 3,
**dadurch gekennzeichnet, dass**
die Bilddaten mit Hilfe eines Schwellwertverfahrens in das Binärbild (18) umgewandelt werden.

5. Verfahren nach Anspruch 4,
**dadurch gekennzeichnet, dass**
ein im Rahmen des Schwellwertverfahrens verwendeter Schwellenwert derart gewählt wird, dass zumindest aus einem Dunkelstrom hervorgegangenes Bildrauschen entfernt wird.

6. Verfahren nach einem der Ansprüche 1 bis 5,
**dadurch gekennzeichnet, dass**
zum Erodieren des Binärbilds (18) eine quadratische Strukturmaske verwendet wird.

7. Verfahren nach einem der Ansprüche 1 bis 6,
**dadurch gekennzeichnet, dass**
zum Prüfen des wenigstens einen Bildabschnitts (24) auf das Vorliegen eines Qualitätsmangels zumindest die folgenden Schritte durchgeführt werden:
a) Bereitstellen eines ersten Datensatzes, wobei der erste Datensatz Absolutgrenzwerte umfasst, die jeweils einen maximal zulässigen Wertebereich an einem zugeordneten Bauteilort des herzustellenden Bauteils im Bildabschnitt (24) charakterisieren;
b) Erfassen eines zweiten Datensatzes mittels einer Erfassungseinrichtung, wobei der zweite Datensatz mit dem ersten Datensatz korrespondierende Ist-Werte umfasst, die den zugeordneten Bauteilort des hergestellten Bauteils im Bildabschnitt (24) charakterisieren;
c) Vergleichen des ersten Datensatzes und des zweiten Datensatzes mittels einer Recheneinrichtung und
c1) Klassifizieren des Bauteils als qualitativ grundsätzlich nicht in Ordnung, wenn wenigstens ein Ist-Wert außerhalb seines zugeordneten maximal zulässigen Wertebereichs liegt; oder
c2) Klassifizieren des Bauteils als qualitativ grundsätzlich in Ordnung, wenn kein Ist-Wert außerhalb seines zugeordneten maximal zulässigen Wertebereichs liegt; und
wenn das Bauteil als qualitativ grundsätzlich in Ordnung klassifiziert wurde:
d) Bereitstellen eines dritten Datensatzes, welcher Mittelwerte umfasst, die mittels der Recheneinrichtung aus mehreren Ist-Werten des zweiten Datensatzes ermittelt werden, wobei die mehreren Ist-Werte einen zusammenhängenden Bauteilbereich, bestehend aus mehreren Bauteilorten, charakterisieren;
e) Ermitteln wenigstens einer bauteilgeometrieabhängigen Ausgleichsfunktion anhand des dritten Datensatzes mittels der Recheneinrichtung;
f) Ermitteln von bauteilgeometrieabhängigen Schwellenwerten mittels der Recheneinrichtung, wobei die Schwellenwerte einen zulässigen Streubereich der Ist-Werte um durch die Ausgleichsfunktion vorgegebene Soll-Werte charakterisieren;
g) Prüfen mittels der Recheneinrichtung, ob wenigstens ein Ist-Wert außerhalb des durch die Schwellenwerte charakterisierten Streubereichs liegt, und
g1) wenn kein Ist-Wert außerhalb des Streubereichs liegt, Klassifizieren des Bauteils als qualitativ in Ordnung; oder
g2) wenn wenigstens ein Ist-Wert außerhalb des Streubereichs liegt, Zusammenfassen aller Ist-Werte, die außerhalb des Streubereichs liegen, in einem fünften Datensatz und Beurteilen der Bauteilqualität anhand des fünften Datensatzes und wenigstens eines vorgegebenen Qualitätskriteriums.

## Claims

1. Method for assessing the quality of a component manufactured by means of an additive manufacturing method, comprising the steps of:
- providing, in digitized form, image data of at least one component layer of the component;
- converting the image data into a binary image (18);
- eroding the binary image (18) into a structure image (20);
- determining contour data (22) of the structure image (20) in order to exclude the transitions between the component and the adjacent powder from the subsequent quality assessment;
- determining at least one image section (24) of the image data, which section is delimited by the contour data (22);
- checking the at least one image section (24) for the presence of an image region corresponding to a quality defect; and
- classifying the component as qualitatively acceptable if there is no quality defect, or
- classifying the component as qualitatively unacceptable if the re is a quality defect, **characterized in that**
the method is carried out for a plurality of or all component layers of the component or for image data that characterize a plane through a plurality of component layers.

2. Method according to claim 1, **characterized in that** an optical tomography device is used to determine the image data to be provided.

3. Method according to either claim 1 or claim 2, **characterized in that** the image data are provided as a sum image calculated from a plurality of individual images and/or as a grayscale image.

4. Method according to any of claims 1 to 3, **characterized in that** the image data are converted into the binary image (18) using a thresholding method.

5. Method according to claim 4, **characterized in that** a threshold value used as part of the thresholding method is selected such that image noise resulting at least from a dark current is removed.

6. Method according to any of claims 1 to 5, **characterized in that** a square structure mask is used to erode the binary image (18).

7. Method according to any of claims 1 to 6, **characterized in that** in order to check the at least one image section (24) for the presence of a quality defect, at least the following steps are carried out:
a) providing a first data set, the first data set comprising absolute limit values, each of which characterizes a maximum permissible value range for an assigned component location, in the image section (24), of the componentto be manufactured;
b) detecting a second data set by means of a detection device, the second data set comprising actual values which correspond to the first data set and characterize the assigned component location of the manufactured component in the image section (24);
c) comparing the first data set and the second data set by means of a computing device and
c1) classifying the component as qualitatively fundamentally unacceptable if at least one actual value is outside the maximum permissible value range assigned thereto; or
c2) classifying the component as qualitatively fundamentally acceptable if no actual value is outside the maximum permissible value range assigned thereto; and
if the component has been classified as qualitatively fundamentally acceptable:
d) providing a third data set which comprises mean values that are determined by means of the computing device from a plurality of actual values of the second data set, the plurality of actual values characterizing a continuous component region consisting of multiple component locations;
e) determining, by means of the computing device and on the basis of the third data set, at least one component-geometry-dependent compensation function;
f) determining component-geometry-dependent threshold values by means of the computing device, the threshold values characterizing a permissible scatter range of the actual values around target values specified by the compensation function;
g) checking, by means of the computing device, whether at least one actual value is outside the scatter range **characterized by** the threshold values, and
g1) classifying the component as qualitatively acceptable if no actual value is outside the scatter range; or
g2) if at least one actual value is outside the scatter range, combining all actual values that are outside the scatter range in a fifth data set and assessing the component quality on the basis of the fifth data set and at least one specified quality criterion.

## Revendications

1. Procédé d'évaluation de la qualité d'un composant fabriqué selon un procédé de fabrication additive, comprenant les étapes suivantes :
- la fourniture des données d'image d'au moins une couche de composant du composant sous forme numérisée ;
- la conversion des données d'image en une image binaire (18) ;
- l'érosion de l'image binaire (18) en une image structurale (20) ;
- la détermination des données de contour (22) de l'image structurale (20) afin d'exclure les transitions entre le composant et la poudre adjacente de l'évaluation de la qualité ultérieure ;
- la détermination d'au moins une section d'image (24) des données d'image délimitée par les données de contour(22) ;
- la vérification de l'au moins une section d'image (24) au niveau de la présence d'une zone d'image correspondant à un défaut de qualité ; et
- la classification du composant comme qualitativement conforme lorsqu'il n'y a pas de défaut de qualité, ou
- la classification du composant comme qualitativement non conforme lorsqu'il y a un défaut de qualité, **caractérisé en ce que**
ledit procédé est mis en oeuvre pour plusieurs ou toutes les couches de composant du composant ou pour les données d'image, lesquelles caractérisent un plan à travers plusieurs couches de composant.

2. Procédé selon la revendication 1, **caractérisé en ce qu'**un dispositif optique de tomographie est utilisé pour déterminer les données d'image à fournir.

3. Procédé selon la revendication 1 ou 2, **caractérisé en ce que** les données d'image sont fournies sous la forme d'une image de somme calculée à partir de plusieurs images individuelles et/ou sous la forme d'une image en niveauxde gris.

4. Procédé selon l'une quelconque des revendications 1 à 3, **caractérisé en ce que** les données d'image sont converties, à l'aide d'un procédé de valeur seuil, en l'image binaire (18).

5. Procédé selon la revendication 4, **caractérisé en ce qu'**une valeur seuil utilisée dans le cadre du procédé de valeurseuil est choisie de telle sorte qu'un bruit d'image résultant d'au moins un courant d'obscurité est supprimé.

6. Procédé selon l'une quelconque des revendications 1 à 5, **caractérisé en ce qu'**un masque structurel carrée est utilisé pour éroder l'image binaire (18).

7. Procédé selon l'une quelconque des revendications 1 à 6, **caractérisé en ce que** pour vérifier l'au moins une section d'image (24) au niveau de la présence d'un défaut de qualité, au moins les étapes suivantes sont effectuées :
a) la fourniture d'un premier ensemble de données, dans lequel le premier ensemble de données comprend des valeurs limites absolues, lesquelles caractérisent respectivement une plage de valeurs maximales admissibles à un emplacement de composant associé du composant à fabriquerdans la section d'image (24) ;
b) la détection d'un deuxième ensemble de données au moyen d'un dispositif de détection, dans lequel le deuxième ensemble de données comprend des valeurs réelles correspondant au premier ensemble de données, lesquelles caractérisent l'emplacement de composant associé du composantfabriqué dans la section d'image (24) ;
c) la comparaison du premier ensemble de données et du deuxième ensemble de données au moyen d'un dispositif de calcul ; et
c1) la classification du composant comme qualitativement fondamentalement non conforme lorsqu'au moins une valeur réelle se situe en dehors de sa plage de valeurs maximales admissibles associée ; ou
c2) la classification du composant comme qualitativement fondamentalement conforme lorsqu'aucune valeur réelle ne se situe en dehors de sa plage de valeurs maximales admissibles associée ; et
lorsque le composant a été classé comme qualitativement fondamentalement conforme :
d) la fourniture d'un troisième ensemble de données, lequel comprend des valeurs moyennes, lesquelles sont déterminées à partirde plusieurs valeurs réelles du deuxième ensemble de données au moyen du dispositif de calcul, dans lequel les plusieurs valeurs réelles caractérisent une zone de composant cohérente constituée de plusieurs emplacements de composant ;
e) la détermination d'au moins une fonction de compensation dépendante de la géométrie du composant en fonction du troisième ensemble de données au moyen du dispositif de calcul ;
f) la détermination des valeurs seuil dépendantes de la géométrie du composant au moyen du dispositif de calcul, dans lequel les valeurs seuil caractérisent une plage d'étalement admissible des valeurs réelles par rapport aux valeurs de consigne prédéfinies par la fonction de compensation ;
g) la vérification, au moyen du dispositif de calcul, si au moins une valeur réelle se situe en dehors de la plage d'étalement **caractérisée par** les valeurs seuil, et
g1) lorsqu'aucune valeurréelle ne se situe en dehors de la plage d'étalement, la classification du composant comme qualitativement conforme ; ou
g2) lorsqu'au moins une valeur réelle se situe en dehors de la plage d'étalement, le regroupement de toutes les valeurs réelles, lesquelles se situent en dehors de la plage d'étalement dans un cinquième ensemble de données, et l'évaluation de la qualité du composant en fonction du cinquième ensemble de données et d'au moins un critère de qualité prédéfini.
